# EUROPEAN PATENT APPLICATION

(11) **EP 0 662 428 A1**
(43) Date of publication of application: **12.07.1995**
(21) Application number: 95850002.7
(22) Date of filing: 04.01.1995
(51) Int. Cl.: B65D 59/02

(54) **End plug for pipe flanges**

(30) Priority: 05.01.1994 NO 940037
(71) Applicant: Kvaerner Rosenberg A/S, N-4085 Hundvag (NO)
(72) Inventor: Austbö, Trond, N-4026 Stavanger (NO); Rönne, Erling, N-4085 Hundväg (NO)
(74) Representative: Onn, Thorsten

(57) **Abstract**

An end plug for pipe flanges is described. The end plug comprises a cylindrical plug body (1) with a peripheral sealing lip (2), and an exterior flange end piece or cap (3), having an annular surface (5) abuttable with a pipe flange (8,9). The end plug is formed of solid-cast rubber and the annular surface (5) is concave, providing said annular surface with a sharp exterior contact edge (6) adapted for abutment with a pipe flange. This end plug will provide excellent sealing for a pipe end, while simultaneously affording a very good protection for the gasket surface (9) of the pipe flange.

## Description

The invention relates to an end plug for pipe flanges, comprising a cylindrical plug body with a peripheral sealing lip, and an exterior flange end piece having an annular surface abuttable with the pipe flange.

End plugs are used for the temporary closing-off and/or sealing of pipe lengths to prevent dirt and similar matter from entering the pipes, as well as to protect the pipe flange gasket surfaces against sandblasting, surface treatment and mechanical stresses.

A commonly known technique is to use blind flanges with, for example, an intermediate rubber packing. This solution, however, is demanding both in terms of labor and in costs.

From US 1,980,364, for example, there is known an end plug having a cup-shaped cylindrical plug body with a peripheral sealing lip. The cup jacket is split to form resilient fingers. This known embodiment provides no protection for the gasket surface of a pipe flange, should one be attached, and thus performs merely as a simple end plug which serves to close the pipe opening.

From US 3,269,581 there is known an end plug having a cylindrical plug body with peripheral sealing lips and having an exterior flange end piece with an annular surface abuttable with the pipe flange. A disadvantage of this known embodiment, even though it provides a certain degree of coverage for the pipe end, is that the flange end piece functions primarily as a stopper and is not specifically designed with a view toward protection of the gasket surface of a possible pipe flange.

According to the invention, therefore, there is suggested an end plug for pipe flanges, comprising a cylindrical plug body with a peripheral sealing lip and an exterior flange end piece, or cap, having an annular surface abuttable with a pipe flange, said cap being characterized in that it is formed of solid-cast rubber or a material possessing similar properties, and in that the annular surface thereof is concave.

Rubber is the material of choice because it has excellent wear properties as regards, for example, resistance to sandblasting and similar processes. The concave configuration of the annular surface provides for formation of a sharp edge for contact with the pipe flange. The flange cap will, at the same time, be "weakened" in structure, providing for a suction effect when pressure is exerted on the exterior end face of the end plug, causing the end plug to be sucked securely in place in the end of the pipe.

The dimensions of the flange cap are determined by the size of the gasket surface of the pipe flange(s), thus ensuring that the annular surface will cover the gasket surface. The sharp outer contact edge, which is formed by virtue of the concavity or inverted conical configuration of the annular surface, will provide an excellent sealing effect, which prevents the penetration of extraneous matter into the pipe.

Tests have shown that an end plug of this type is excellently suited for use as an end plug for flanged pipes, which undergo many operations such as, for example, welding, sandblasting, painting and installation. Between each operation the pipe must be stored and transported. Throughout the entire process it will be important to protect the flange surfaces against mechanical damage and corrosion.

The end plug may be pressed manually into the pipe, and it is manually removable. As mentioned above, an extra pressure exerted against the outer face will generate a suction effect which presses the end plug securely against the gasket surface of the pipe flange.

An end plug according to the invention may be reused several times before it becomes worn and must be discarded.

The invention will now be explained in more detail, with reference to the drawings, wherein:
- Figure 1: is an end view of one-half of an end plug according to the invention,
- Figure 2: is a semi-circular section through the end plug, and
- Figure 3: is a section illustrating the placement of the end plug in a flanged pipe.

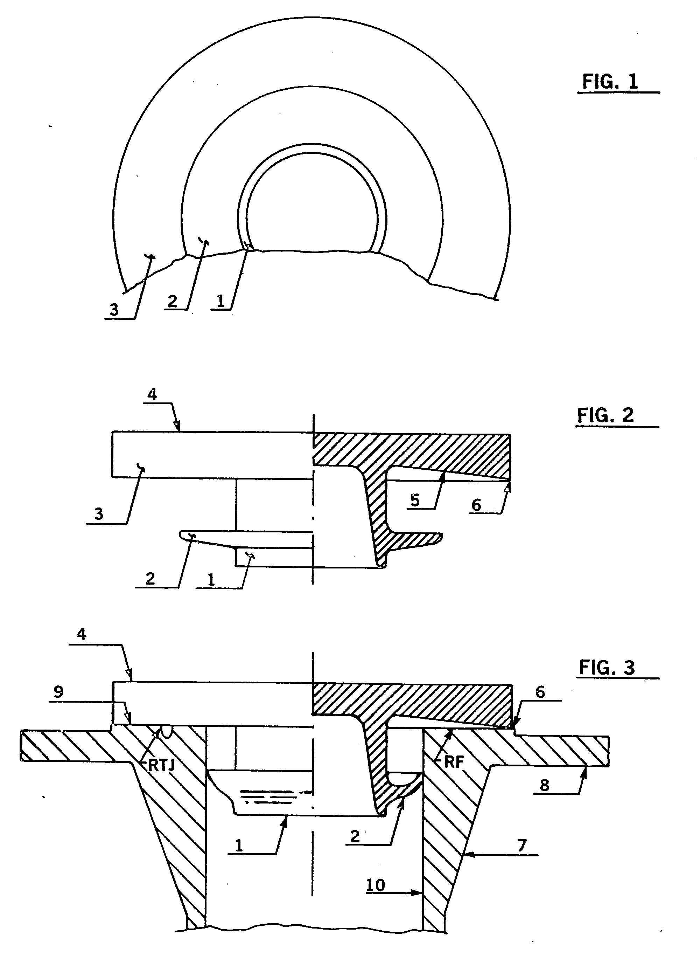

The end plug shown in the figures comprises a cylindrical plug body 1 with a peripheral sealing lip 2, and a flange end piece or cap 3. This flange cap has an end face 4 and an annular surface 5. As is apparent from Figure 2, in particular, the annular surface is concave or is formed with a conical recess, providing annular surface 5 with a sharp outer contact edge 6. The end plug is formed as an integral, solid-cast rubber element. The plug body as illustrated is hollow, but it may also have a more or less massive structure.

In Figure 3 the end plug is shown in its position as the end plug inserted in a flanged pipe 7. Flanged pipe 7 is provided with a pipe flange 8 with a gasket surface 9. It is apparent that the end plug has been pressed into the pipe end, and that sealing lip 2 has been bent upwards, providing for tensioned contact with the interior pipe wall 10. The sharp outer contact edge 6 abuts with gasket surface 9 of the pipe flange. Since the end plug's flange cap 3 is provided with a recessed annular surface, the exertion of an extra pressure on face 4 will create a suction effect and cause the end plug to be pressed against gasket surface 9.

As a general rule of thumb, it is assumed that the sealing lip 2 should have a diameter equal to the outer diameter of the pipe into which the end plug is to be pressed. This dimensioning will provide for secure retention of the plug in the pipe. For the concave or slightly inverted conical recess, an angle of about 3° between the plane of the annular surface and the bottom face of the recess will afford effective sealing against the outer peripheral area of the gasket surface.

A favorable rubber type is one consisting of 65% natural rubber and 35% synthetic rubber, and having a hardness of 85 (GR SHORE A).

## Claims

1. End plug of solid-cast rubber material for a pipe flange, comprising a cylindrical plug body (1) with a peripheral sealing lip (2), and an exterior flange end piece or cap (9), having a plane end face (4) and an annular surface (5,6) abuttable with a pipe flange (8,9),
**characterized in** that the annular surface is concave (5), with a sharp exterior circumferential edge (6).

2. End plug according to claim 1,
**characterized in** that the concave annular surface (5) is formed with an angle of 3° between the plane of the annular surface and the bottom of the recess (5).
